# NEW EUROPEAN PATENT SPECIFICATION

(11) **EP 0 482 763 B2**
(45) Date of publication and mention of the opposition decision: **28.01.2004**
(45) Mention of the grant of the patent: 16.03.1994
(21) Application number: 91308725.0
(22) Date of filing: 25.09.1991
(51) Int. Cl.: B27B 17/02

(54) **Guide bars for tree harvesters**
Führungsschienen für Baumerntemaschinen
Barres de guidage pour les abatteuses-ébrancheuses d'arbres

(30) Priority: 26.10.1990 US 604613
(43) Date of publication of application: 29.04.1992
(73) Proprietor: BLOUNT, INC., Portland, Oregon 97222 (US)
(72) Inventor: Vanderzanden, James Lee, Tigard, Oregon 97224 (US); Seigneur, Christopher David, West Linn, Oregon 97068 (US)
(74) Representative: Walker, Antony James Alexander

(56) References cited:
- GB-A- 1 084 144

## Description

This invention relates to guide bars for saw chains used on mechanical tree harvesters.

Mechanical tree harvesters are used for logging trees and typically consist of a tractor equipped with a boom. A grapple on the end of the boom grips a standing tree. A chain saw located below the grapple, and controlled by the operator from the cab of the tractor, severs the tree. The operator manoeuvres the boom and grapple to lay the severed tree on the ground. The process is repeated with the next tree to be felled.

The chain saw includes a guide bar which projects outwardly from a mounting bracket and which is mounted on a pivot. The operator initially pivots the bar and the saw chain it carries to a protected position inside a channel of a rigid guard. With the tree held by the grapple, the guide bar and driven saw chain are pivoted out of the guard and then made to cut through the base of the tree. In the process, the unguarded bar and chain will typically cut through the tree without incident and can be returned to the protected position inside the guard before the operator manoeuvres the severed tree onto the ground.

The description above is of normal operation, but not infrequently, because of various circumstances that are encountered, the bar and chain are subject to damage.

Damage may occur for example when trees are grouped too close together. The bar and chain of the saw chain will cut through the tree held by the grapple and begin cutting in a closely adjacent tree before the tree held by the grapple is completely severed. When the tree held by the grapple has been severed, the boom will instantly lift the tree. With the bar and chain embedded in the adjacent tree, this movement translates into a bending force applied to the bar. Something has to give, and the result is often that the bar becomes bent and damaged.

In other instances, the tree trunk is so misshapen that the grapple will not firmly grip the tree. If the grapple loses its grip on the tree during the cutting operation, the tree will slide down against the bar and the bar will be damaged. Operator error is a further possible cause of damage. A lifting force is applied by the grapple to prevent the kerf from collapsing and binding the chain. Too much lifting force applied during the cutting operation can cause the grapple to slide up the tree trunk and again a severe bending force is applied to the bar.

Other examples could be given but the common result of all these occurrences is that the bar becomes bent and is most likely further damaged. The bar is mounted to extend from the mounting bracket and bending occurs most frequently adjacent the juncture of the mounting bracket, at the inner end of the bar. The bend is most often a sharp bend which invariably cracks the bar and renders it non-repairable. Such breakage of the guide bar is a major concern and expense in mechanical tree harvesting operations and alleviating the problem is an object of the present invention.

A guide bar for a chain saw and particularly such a saw mounted on a tree harvester, is subjected to severe forces that induce rapid wear. If the guide bar is to have an acceptable life, it must be structured with optimum wear resistant capability. With present technology, such wear resistance is provided only by very hard metals and very hard metals do not readily bend. They instead resist bending until that resistance is overpowered and they then break. Conversely, metal can be made to bend readily but the very property that permits bending is the property that produces increased wear.

In a typical guide bar, the body of the bar has one level of hardness and the surrounding edge is hardened further (e.g. by heat treatment) to form the guide rails on which the saw chain is entrained. The saw chain is pressed against the rails during the forced cutting operation, so creating extremely high temperatures and pressures which have to be resisted by hardened surfaces if the bar is to have an effective life. These rail areas will not bend readily and if they cracks, the bar becomes useless.

US-A-2838833 discloses a chain saw cutter bar made up of two mated and thin laminae of metal secured together flat against each other. A shallow groove is formed in the inner face of one or both of the laminae along the desired edge or edges thereof.

Each laminae is only one half the thickness of the finished bar and consequently there is no great difficulty in working the metal as there is when the bar is manufactured from a single piece of material. If the bar becomes bent in use it can still be straightened since both of the laminae are exposed for hammering.

There is also known from Sandvik Windsor a chain saw guide bar, code No. 9601-42-404. According to a test report relating to this guide bar prepared by Stihl and made available in opposition proceedings against the patent under reference D4-TR, hardening of the guide rails is interrupted in the region of the middle of the guide bar. Outside this region the hardness of the guide rails is 61 HRC, but inside it the hardness of the guide rails is equal to that of the guide bar body which is 54 HRC.

According to a first aspect of the present invention there is provided a chain saw guide bar for a mechanical tree harvester wherein trees to be cut are centered on the cutting length of the guide bar to thereby provide progressively less cutting action and corresponding less bar wear advancing from the bar center to the bar mount, the guide bar comprising a planar elongate bar having an inner end, an inner end portion for mounting to a support structure of a mechanical harvester, an outer end, and opposed guide edges extending between the inner and outer ends for guiding a driven saw chain from the inner end along one edge to and around the outer end and back to the inner end along the other edge, and defining thereby the cutting length of said guide bar, characterised by a zone extending across the width of the bar, and located adjacent to and outwardly of the said inner end portion and substantially rearwardly of the center of the cutting length of the guide bar so that the majority of cutting action occurs between the zone and the outer end of the bar, the bar being sufficiently pliable in the zone to permit significant plastic deformation of the bar in the form of bending without breaking, and the material of said bar within said zone and inclusive of its total thickness being substantially totally fused together and thereby maintaining unity of the material in said zone during said plastic deformation.

According to a second aspect of the present invention there is provided a method for producing a saw chain guide bar for a mechanical harvester wherein trees to be cut are centered on the cutting length of the guide bar to thereby provide progressively less cutting action and corresponding less bar wear advancing from the bar center to the bar mount comprising:
i) forming an elongate planar bar to have inner and outer ends, opposed guide edges extending between the inner and outer ends, and means for mounting the inner end of the bar to a support structure of the harvester; and
ii) hardening the guide edges to have increased wear resistance, characterised by a zone extending across the width of the bar, and located adjacent to and outwardly of the inner end portion and substantially rearwardly of the center of the cutting length of the guide bar so that the majority of cutting action occurs between the zone and the outer end of the bar, the bar being sufficiently pliable in the zone to permit significant plastic deformation of the bar without breaking, and the material of said bar within said zone and inclusive of its total thickness being substantially totally fused together and thereby maintaining unity of the material in said zone during said plastic deformation.

The present invention is based on the recognition that the area where bending forces are typically applied during the non-typical occurrences of forced deformation of the bar, that is, at the rear or inner end adjacent the mounting brackets, is also the area where the cutting forces create the least wear. A bar is not normally buried in the cut right up to the mounting bracket and even when it is, the cutting action is restricted to a small segment of the tree's total cross section. The greatest cutting action and highest wear problem occurs at the bar centre where the chain has to cut through the total tree thickness.

The invention provides a solution to this problem in the provision of a reduced hardness area across a small band of the bar adjacent the mounting bracket (sometimes referred to as the zone of bending). The reduced hardness is selected to permit the necessary bending within the narrow band of the zone while maintaining the wear resistance as high as otherwise permissible. This reduced hardness zone permits bending but at the sacrifice of reduced wear resistance. However, the band of reduced wear resistance is strategically placed in just that position where wearing is the lowest and the application of the bending forces is the highest. Because bending thus occurs without breaking or cracking the metal, the bar can be straightened to its original shape or at least close enough to such shape to render the bar serviceable for continued operation.

The invention will thus be seen to provide a guide bar that is designed to suffer deformation and is repairable for subsequent use.

The invention is more fully described below, by way of example, in the following description and with reference to the accompanying drawings, in which:
Fig. 1 illustrates a boom end portion of a tree harvester engaged in a cutting operation;
Fig. 2 is a plan view of the guide bar and saw chain used on the tree harvester of Fig. 1, the guide bar being in accordance with the present invention;
Fig. 3 is a sectional view taken on section lines 3-3 of Fig. 2;
Fig. 4 is a view similar to Fig. 3 of a modified form of bar in accordance with the invention;
Fig. 5 illustrates a guide bar in accordance with the invention having been subjected to a bending force;
Figs. 6 and 7 illustrate respectively different techniques for constructing the bar of Fig. 3; and
Fig. 8 schematically illustrates a process for producing the reduced hardness zone of either of the bars of Figs. 3 and 4.

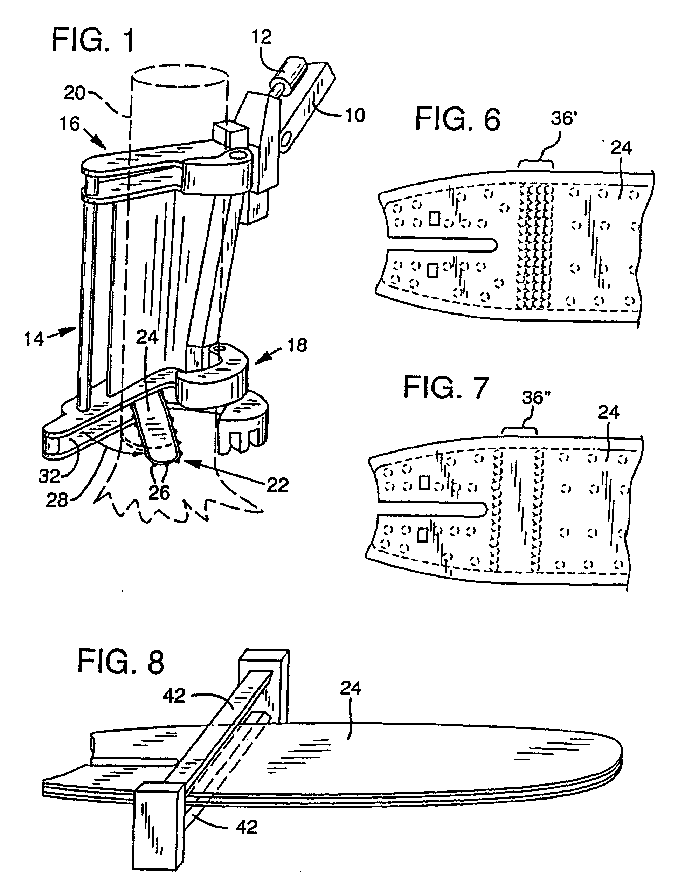

Fig. 1 illustrates the free end of a bottom 10 which is typically mounted to a tractor or the like (not shown). An operator on the tractor operates controls that produce movements of the boom 10 and of the various other components involved in the harvesting operation; for example, a hydraulic cylinder 12 functions to tilt a mast 14 relative to the boom.

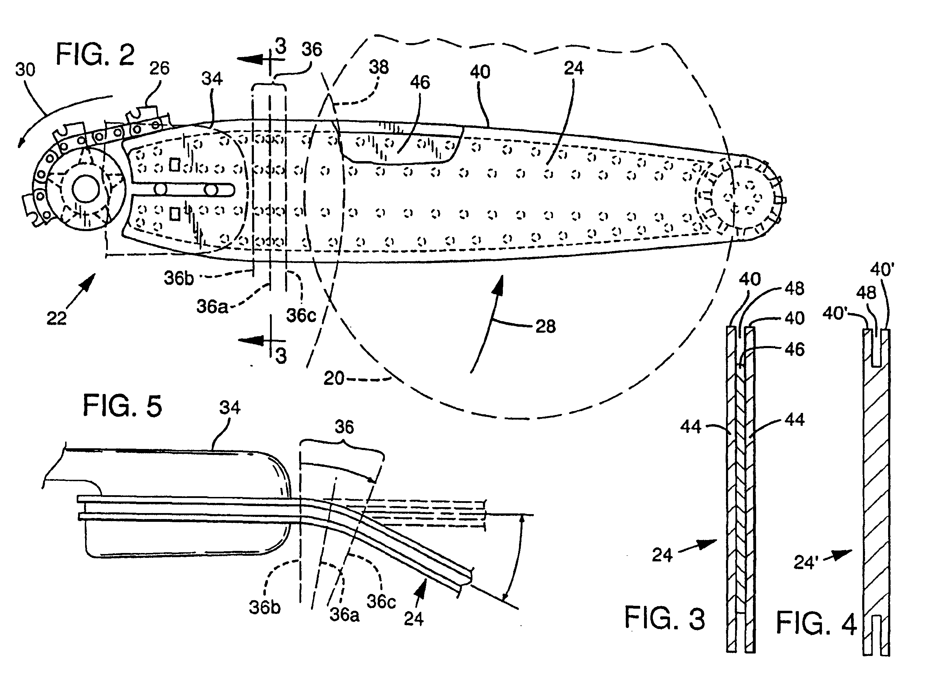

As is typical in a mechanical tree harvester, the mast 14 includes upper and lower grapples 16 and 18 which are closed on a tree 20 to secure the mast to the tree. A chain saw 22 having a bar24 with an edge groove 48 for receiving a saw chain 26 and side rails 40 for supporting the chain, is carried by the mast 14. With the mast 14 secure, an appropriate lifting force is applied to the mast and the chain saw is activated so as to pivot out of a guard channel 32 and through the tree thickness. The pivoting movement is indicated by arrow 28 and the chain drive movement by arrow 30 in Fig. 2. The lifting force applied to the mast 14 prevents the tree from collapsing on the saw chain 22.

In Fig. 2, the components of the chain saw 22 are illustrated in full line except for the mounting bracket 34 which is shown in dash lines. This bracket 34 is more clearly illustrated in Fig. 5. The tree 20 is superimposed in dash lines over the bar 24 in the approximate position as illustrated in Fig. 1. It is to be particularly noted that a zone 36 between the tree 20 and the bracket 34 is available for cutting but does not normally participate in the cutting action, being located behind or inward from the tree. However, even when the zone 36 is involved in the cutting action, the participation is minimal. This will be apparent by noting the extent of cutting that takes place in that area outlined by dash line 36. If the tree 20 is supposed to be shifted rearward to the edge of bracket 34, it will be appreciated that the zone 36 of the bar would only pass through a small segment of the tree. These factors together indicate the relatively small cutting action that takes place in the zone 36 of the bar. Wearing of the rail 40 is much higher across the portion of the rail inside the tree. Thus, the wear resistance demand at zone 36 is substantially less than in the centre of the bar which is always involved in the cutting action.

Should a mishap occur where the bar 24 is bent, it generally occurs near the mounting bracket 34 as shown in Fig. 5. In prior bars, the bend has been tight, i.e., had a small radius, which initiated cracks or even breakage. It was difficult if not impossible to repair the bar under these conditions. A number of factors enter into the provision of the bend area which is intended for the zone 36. A sharp bend radius should be avoided because it creates the greatest strain of the metal and is most likely to produce the undesirable cracking of the rails. Thus, the centre of the bend should be located away from the outer edge of the bracket 34.

From Fig. 2, it will be appreciated that the zone 36 illustrated is a portion of the barthat extends about 7.62 cm. (3 inches) along the bar length starting from about 1.27 cm. (1/2 inch) from the outer edge of the bracket 34.

The bar as illustrated in Figs. 2 and 3 is a laminated bar. The bar body is produced initially to a hardness in the range of 35-44 Rockwell C, and preferably of about 37 Rockwell C. The bar rail 40 is heat treated to a hardness in the range of 55-61 Rockwell C, and preferably of about 57 Rockwell C.

Referring to Fig. 8, the bar structure is then subjected to a further heat treatment in the zone 36 as indicated by the provision of heating bars 42 that bracket the zone as illustrated. The heat treatment applied reduces the rail hardness across the entire width of the bar within the bracketed area, including the bar rails 42. However, the hardness is not reduced by this method to achieve a constant hardness over the entire area of the zone 36. Referring to Fig. 2, the centre 36a of the zone 36 is reduced to a hardness within the range of 20-30 Rockwell C, and preferably of about 25 Rockwell C, whereas the hardness of the outer parts of the zone 36 increases to the hardness values mentioned above, namely, 37 Rockwell C for the body at the front and rear edges 36b, 36c and 57 Rockwell C for the rail portions.

The axis of the possible bend is at or near the centre 36a of the zone 36 and is well forward of the front edge of bracket 36. Manufacturing processes that provide a sharperchange from hard to soft will require a shorter zone and will preferably be centred on the bend axis indicated for zone 36, e.g. about 5.08 cm. (2 inches) from the bracket 34.

The preferred guide bar illustrated is laminated as previously noted. Fig. 3 is of course the laminate bar which is referred to throughout. Two side laminates 44 are separated by a core laminate 46. The core laminated 46 has a reduced configuration relative to the side laminates 44 so as to provide a groove 48 which defines the rails 40 which support the side links of the saw chain.

This lamination does create one further problem. Upon bending, the layers or laminates 44,46 of the laminated bar separate or bulge apart. The metal stretches and even though the bend can be straightened, the stretching renders it difficult or impossible to recapture the original shape. To cure this, the laminate sections are effectively fused together at the zone 36. Fig. 6 illustrates a zone 36' that is spot welded, the spot welds being grouped close together. Fig. 7 illustrates a zone 36" wherein a process referred to as roller welding achieves an almost total fusion of the laminates or layers.

Fig. 4 illustrates an alternative, solid, bar 24' that has a thickness equal to that of the three combined laminates 46 and 44. The groove 48' is machined into the edge and forms the side rails 40'.

In each of the bar structures shown in Figs. 3 and 4, the chain supporting edges of the rails 40,40' are hardened by an appropriate heat treating process or by application of a thin layer of stellite.

In operation, the harvesting process as explained for Fig. 1 can go awry for any one of a number of reasons. The mast 40 inadvertently shifts upward relative to the tree being severed or in some cases is dropped down onto the tree stump. In one case the bar 24 is bent down as illustrated in Fig. 5 and in the other it is bent up. However, in all material respects, it makes no difference whether the bar is bent up or bent down.

As will be noted, the bending action occurs all within the zone 36 and around the centre line 36a. Since the material of the zone 36 throughout the bar thickness simulates a solid metal plate that has been softened to permit bending, the bend is a smooth bend with minimal deformation. To repair the bar, it is simply forced back to its straight condition which can be accomplished with basic tools that can be carried in the field. At worst, it can be straightened in a workshop and returned to service, in either event with a substantial saving over the prior practice of simply disposing of the bar enforced with prior art bars because the bending that occurs at the position of the zone 36 would invariably generate cracks in the bar body and/or rails 40 which would render the bar unusable.

Others skilled in the art will conceive of various modifications to the illustrated chain saw guide bars. For example, the zone 36 may be provided by an insert section that is fused front and back to the bar although this would not be considered feasible with current technology. The point is that the invention is not limited to any specific embodiment but instead encompasses all variations as defined by the claims appended hereto.

## Claims

1. A chain saw guide bar for a mechanical tree harvester wherein trees to be cut are centered on the cutting length of the guide bar to thereby provide progressively less cutting action and corresponding less bar wear advancing from the bar center to the bar mount, the guide bar comprising a planar elongate bar having an inner end, an inner end portion for mounting to a support structure of a mechanical harvester, an outer end, and opposed guide edges extending between the inner and outer ends for guiding a driven saw chain from the inner end along one edge to and around the outer end and back to the inner end along the other edge, and defining thereby the cutting length of said guide bar, **characterised by** a zone (36) extending across the width of the bar, and located adjacent to and outwardly of the said inner end portion and substantially rearwardly of the center of the cutting length of the guide bar so that the majority of cutting action occurs between the zone and the outer end of the bar, the bar being sufficiently pliable in the zone to permit significant plastic deformation of the bar in the form of bending without breaking, and the material of said bar within said zone and inclusive of its total thickness being substantially totally fused together and thereby maintaining unity of the material in said zone during said plastic deformation.

2. A chain saw guide bar as claimed in claim 1 wherein the material of the bar is steel, wherein the guide edges (40) outside the zone (36) are hardened to resist wear so as to be intolerant to bending without breaking, and the guide edges within the zone are softened to permit bending and have reduced wear resistance properties compared to the guide edges outside the zone.

3. A chain saw guide bar as claimed in claim 1 wherein the bar including the guide edges is pliable in the zone to permit bending of the bar without breaking, and the guide edges outside the zone are hardened to resist wear so as to be intolerant to bending without breaking.

4. A chain saw guide bar as claimed in claim 1 or 2 wherein the material of the bar in the zone (36) has a hardness in the range of 20 to 30 Rockwell C.

5. A chain saw guide bar as claimed in claim 2 wherein the guide edges are hardened to a first hardness in the range 55 to 61 Rockwell C, the bar between the guide edges is hardened to a second hardness in the range of 35 to 44 Rockwell C, the guide edges in the zone (36) have a hardness decreasing from the first hardness at the ends of the zone to a third hardness near a centre of the zone, and the bar between the guide edges of the zone has a hardness decreasing from the second hardness at the ends of the zone to the third hardness near the centre of the zone, the third hardness being in the range of 20 to 30 Rockwell C.

6. A chain saw guide bar as claimed in any preceding claim wherein the zone (36) has a length of about 7.62 cm. (3 inches), and the end of the zone adjacent the inner end of the bar is spaced outward from the inner end portion by a distance of about 1.27 cm. (½ inch).

7. A chain saw guide bar as claimed in any preceding claim wherein the guide bar is a laminated structure comprising laminates that are bonded together, the bonding in the zone being substantially continuous to simulate total fusion of the laminates in the zone.

8. A method for producing a saw chain guide bar for a mechanical harvester wherein trees to be cut are centered on the cutting length of the guide bar to thereby provide progressively less cutting action and corresponding less bar wear advancing from the bar center to the bar mount comprising:
i) forming an elongate planar bar to have inner and outer ends, opposed guide edges extending between the inner and outer ends, and means for mounting the inner end of the bar to a support structure of the harvester; and
ii) hardening the guide edges to have increased wear resistance, **characterised by** a zone (36) extending across the width of the bar, and located adjacent to and outwardly of the inner end portion and substantially rearwardly of the center of the cutting length of the guide bar so that the majority of cutting action occurs between the zone and the outer end of the bar, the bar being sufficiently pliable in the zone to permit significant plastic deformation of the bar without breaking, and the material of said bar within said zone and inclusive of its total thickness being substantially totally fused together and thereby maintaining unity of the material in said zone during said plastic deformation.

9. A method as claimed in claim 8 comprising hardening the entire bar length to obtain a consistent wear resistant hardness, and discriminately treating the bar in the zone (36) to reduce the hardness in the zone to permit bending of the bar without breaking.

10. A method as claimed in claim 9 wherein treating the bar in the zone (36) reduces the hardness of the zone to within the range of 20 to 30 Rockwell C.

11. A method as claimed in claim 9 including hardening the guide edges to a first hardness in the range of 55 to 61 Rockwell C,
hardening the body of the bar to a second hardness in the range of 35 to 44 Rockwell C, and
treating the zone (36) so as to have a hardness of the guide edges of the zone which decreases from the first hardness at each edge of the zone to a third hardness range near the centre of the zone, and so as to have a hardness of the body of the zone decreasing from the second hardness at each edge of the zone to the third hardness near the centre of the zone, the third hardness being within the range of 20 to 30 Rockwell C.

12. A method as claimed in claim 8, 9, 10 or 11 including defining the length of the zone at about 7.62. (3 inches) and spacing a leading edge of the zone at a distance of about 1.27 cm. (½ inch) adjacent the inner end beyond the mounting thereof.

## Patentansprüche

1. Motorsägenführungsschiene für eine mechanische Holzerntemaschine, bei der zu sägende Bäume auf der Schneidlänge der Führungsschiene zentriert werden, um dadurch in der Richtung von der Schienenmitte zur Schienenhalterung zunehmend weniger Schneideingriff und entsprechend geringeren Schienenverschleiß zu ergeben, wobei die Führungsschiene eine plane längliche Schiene mit einem inneren Ende, einem inneren Endteil zum Haltern einer Trägerkonstruktion einer mechanischen Holzemtemaschine, einem äußeren Ende und einander gegenüberliegende, sich zwischen dem inneren und dem äußeren Ende erstreckende Führungsränder zum Führen einer angetriebenen Sägekette vom inneren Ende an einem Rand entlang zum äußeren Ende und um es herum und am anderen Rand entlang zurück zum inneren Ende umfasst und dadurch die Schneidlänge der genannten Führungsschiene definiert, **gekennzeichnet durch** eine Zone (36), die sich über die Breite der Schiene erstreckt und sich neben dem genannten inneren Endteil und von ihm nach außen und im Wesentlichen rückwärtig von der Mitte der Schneidlänge der Führungsschiene befindet, sodass der Großteil des Schneideingriffs zwischen der Zone und dem äußeren Ende der Schiene stattfindet, wobei die Schiene in der Zone ausreichend biegbar ist, um eine bedeutende plastische Verformung der Schiene in der Form eines Biegens ohne zu brechen zuzulassen, und das Material der genannten Schiene innerhalb der genannten Zone und einschließlich ihrer gesamten Dicke im Wesentlichen vollständig verschmolzen ist und **dadurch** die Einheit des Materials in der genannten Zone während der genannten plastischen Verformung aufrecht erhält.

2. Motorsägenführungsschiene nach Anspruch 1, bei der das Material der Schiene Stahl ist, wobei die Führungsränder (40) außerhalb der Zone (36) gehärtet sind, um verschleißfest zu sein, sodass sie gegenüber einem Biegen ohne zu brechen intolerant sind, und die Führungsränder innerhalb der Zone erweicht sind, um ein Biegen zuzulassen, und im Vergleich mit den Führungsrändem außerhalb der Zone geringere Verschleißwiderstandseigenschaften haben.

3. Motorsägenführungsschiene nach Anspruch 1, wobei die Schiene mit den Führungsrändern in der Zone biegbar ist, um das Biegen der Schiene ohne zu brechen zuzulassen, und die Führungsränder außerhalb der Zone gehärtet sind, um verschleißfest zu sein, sodass sie gegenüber einem Biegen ohne zu brechen intolerant sind.

4. Motorsägenführungsschiene nach Anspruch 1 oder 2, bei der das Material der Schiene in der Zone (36) eine Härte im Bereich von 20 bis 30 Rockwell C hat.

5. Motorsägenführungsschiene nach Anspruch 2, bei der die Führungsränder auf eine erste Härte im Bereich von 55 bis 61 Rockwell C gehärtet sind, die Schiene zwischen den Führungsrändern auf eine zweite Härte im Bereich von 35 bis 44 Rockwell C gehärtet ist, die Führungsränder in der Zone (36) eine Härte haben, die von der ersten Härte an den Enden der Zone auf eine dritte Härte nahe der Mitte der Zone abnimmt, und die Schiene zwischen den Führungsrändem der Zone eine Härte hat, die von der zweiten Härte an den Enden der Zone auf die dritte Härte nahe der Mitte der Zone abnimmt, wobei die dritte Härte im Bereich von 20 bis 30 Rockwell C liegt.

6. Motorsägenführungsschiene nach einem der vorhergehenden Ansprüche, bei der die Zone (36) eine Länge von ungefähr 7,62 cm (3 Zoll) hat und das Ende der Zone neben dem inneren Ende der Schiene nach außen von dem inneren Endteil um einen Abstand von ungefähr 1,27 cm (1/2 Zoll) beabstandet ist.

7. Motorsägenführungsschiene nach einem der vorhergehenden Ansprüche, wobei die Führungsschiene eine laminierte Struktur ist, die miteinander fest verbundene Schichtstoffe umfasst, wobei die feste Verbindung in der Zone im Wesentlichen kontinuierlich ist, um das vollständige Verschweißen der Schichtstoffe in der Zone anzuregen.

8. Verfahren zum Herstellen einer Sägenkettenführungsschiene für eine mechanische Holzemtemaschine, bei der zu sägende Bäume auf der Schneidlänge der Führungsschiene zentriert werden, um dadurch in der Richtung von der Schienenmitte zur Schienenhalterung zunehmend weniger Schneideingriff und entsprechend geringeren Schienenverschleiß zu ergeben, umfassend:
i) Bilden einer länglichen planen Schiene, sodass sie ein inneres und ein äußeres Ende, einander gegenüberliegende, sich zwischen dem inneren und dem äußeren Ende erstreckende Führungsränder und Mittel zum Haltern des inneren Endes der Schiene an einer Trägerkonstruktion der Holzerntemaschine hat, und
ii) Härten der Führungsränder, damit sie einen größeren Verschleißwiderstand haben, **gekennzeichnet durch** eine Zone (36), die sich über die Breite der Schiene erstreckt und sich neben dem genannten inneren Endteil und von ihm nach außen und im Wesentlichen rückwärtig von der Mitte der Schneidlänge der Führungsschiene befindet, sodass der Großteil des Schneideingriffs zwischen der Zone und dem äußeren Ende der Schiene stattfindet, wobei die Schiene in der Zone ausreichend biegbar ist, um eine bedeutende plastische Verformung der Schiene ohne zu brechen zuzulassen, und das Material der genannten Schiene innerhalb der genannten Zone und einschließlich ihrer gesamten Dicke im Wesentlichen vollständig verschmolzen ist und **dadurch** die Einheit des Materials in der genannten Zone während der genannten plastischen Verformung aufrecht erhält.

9. Verfahren nach Anspruch 8, umfassend das Härten der gesamten Schienenlänge, um eine konsistente verschleißfeste Härte zu erhalten, und unterschiedliches Behandeln der Schiene in der Zone (36) zum Verringern der Härte in der Zone, um das Biegen der Schiene ohne zu brechen zuzulassen.

10. Verfahren nach Anspruch 9, bei dem das Behandeln der Schiene in der Zone (36) die Härte der Zone auf innerhalb des Bereichs von 20 bis 30 Rockwell C reduziert.

11. Verfahren nach Anspruch 9, einschließlich des Härtens der Führungsränder auf eine erste Härte im Bereich von 55 bis 61 Rockwell C,
des Härtens des Schienenkörpers auf eine zweite Härte im Bereich von 35 bis 44 Rockwell C und
des Behandelns der Zone (36), damit die Führungsränder der Zone eine Härte haben, die von der ersten Härte an jedem Zohnenrand auf einen dritten Härtebereich nahe der Mitte der Zone abnimmt, und damit der Zonenkörper eine Härte hat, die von der zweiten Härte an jedem Zonenrand auf die dritte Härte nahe der Mitte der Zone abnimmt, wobei die dritte Härte im Bereich von 20 bis 30 Rockwell C liegt.

12. Verfahren nach Anspruch 8, 9, 10 oder 11 mit dem Definieren der Länge der Zone auf ungefähr 7,62 (3 Zoll) und das Beabstanden eines vorderen Rands der Zone im Abstand von ungefähr 1,27 cm (1/2 Zoll) neben dem inneren Ende jenseits der Halterung davon.

## Revendications

1. Une barre de guidage de scie à chaîne pour moissonneuse d'arbres mécanique, dans laquelle les arbres à couper sont centrés sur la longueur de coupe de la barre de guidage afin de fournir ainsi une action de coupe progressivement diminuée et de ce fait moins d'usure de la barre en avançant du centre de la barre au support de la barre, la barre de guidage comportant une barre plane allongée ayant une extrémité intérieure, une partie d'extrémité intérieure pour être fixée à une structure de support d'une moissonneuse mécanique, une extrémité extérieure, et des bords de guidage opposés s'étendant entre les extrémités intérieure et extérieure afin de guider une chaîne de scie entraînée à partir de l'extrémité intérieure le long d'un bord jusqu'à et autour de l'extrémité extérieure, puis en retour le long de l'autre bord jusqu'à l'extrémité intérieure, et définissant par là la longueur de coupe de ladite barre de guidage, **caractérisée par** une zone (36) s'étendant sur la largeur de la barre, et située en position adjacente à et vers l'extérieur de ladite partie d'extrémité intérieure et sensiblement vers l'arrière du centre de la longueur de coupe de la barre de guidage de sorte que la majorité de l'action de coupe a lieu entre la zone et l'extrémité extérieure de la barre, la barre étant suffisamment flexible dans la zone pour permettre une importante déformation plastique de la barre en forme de flexion sans rupture, et la matière de ladite barre à l'intérieure de ladite zone et y compris son épaisseur totale étant sensiblement entièrement fondue ensemble et maintenant ainsi l'unité de la matière dans ladite zone pendant ladite déformation plastique.

2. Une barre de guidage de scie à chaîne conformément à la revendication 1, dans laquelle la matière de la barre est de l'acier, dans lequel les bords de guidage (40) à l'extérieur de la zone (36) sont durcis pour résister à l'usure de façon à être intolérants à la flexion sans rupture, et les bords de guidage à l'intérieur de la zone sont adoucis pour permettre la flexion et ont des propriétés de résistance à l'usure réduites par rapport aux bords de guidage situés à l'extérieur de la zone.

3. Une barre de guidage de scie à chaîne conformément à la revendication 1, dans laquelle la barre, y compris les bords de guidage, est souple dans la zone pour permettre la flexion de la barre sans rupture, et les bords de guidage hors de la zone sont durcis pour résister à l'usure de manière à être intolérants à la flexion sans rupture.

4. Une barre de guidage de scie à chaîne conformément à la revendication 1 ou 2, dans laquelle la matière de la barre dans la zone (36) a une dureté dans la gamme de 20 à 30 Rockwell C.

5. Une barre de guidage de scie à chaîne conformément à la revendication 2, dans laquelle les bords de guidage sont durcis à une première dureté dans la gamme de 55 à 61 Rockwell C, la barre entre les bords de guidage est durcie à une deuxième dureté dans la gamme de 35 à 44 Rockwell C, les bords de guidage dans la zone (36) ont une dureté décroissante à partir de la première dureté aux extrémités de la zone jusqu'à une troisième dureté près d'un centre de la zone, et la barre entre les bords de guidage de la zone a une dureté décroissante à partir de la deuxième dureté aux extrémités de la zone jusqu'à la troisième dureté près du centre de la zone, la troisième dureté étant dans la gamme de 20 à 30 Rockwell C.

6. Une barre de guidage de scie à chaîne conformément à l'une quelconque des revendications précédentes, dans laquelle la zone (36) a une longueur d'environ 7,62 cm (3 pouces), et l'extrémité de la zone adjacente à l'extrémité intérieure de la barre est espacée vers l'extérieur d'une distance d'environ 1,27 cm (1/2 pouce) de la partie d'extrémité intérieure.

7. Une barre de guidage de scie à chaîne conformément à l'une quelconque des revendications précédentes, dans laquelle la barre de guidage est une structure laminée comportant des laminés collés ensemble, le collage dans la zone étant sensiblement continu pour simuler une fusion totale des laminés dans la zone.

8. Un procédé de production d'une barre de guidage de scie à chaîne pour moissonneuse mécanique, dans laquelle les arbres à couper sont centrés sur la longueur de coupe de la barre de guidage afin de produire ainsi une action de coupe diminuant progressivement et de ce fait moins d'usure de la barre en avançant du centre de la barre au support de la barre, comprenant :
i) façonnage d'une barre plane allongée ayant des extrémités intérieure et extérieure, des bords de guidage opposés s'étendant entre les extrémités intérieure et extérieure, et des moyens de monter l'extrémité intérieure de la barre à une structure de support de la moissonneuse ; et
ii) durcissement des bords de guidage pour obtenir un accroissement de la résistance à l'usure,
**caractérisé par** une zone (36) s'étendant sur la largeur de la barre, et adjacente à et vers l'extérieur de la partie d'extrémité intérieure et sensiblement vers l'arrière du centre de la longueur de coupe de la barre de guidage de sorte que la majorité de l'action de coupage ait lieu entre la zone et l'extrémité extérieure de la barre, la barre étant suffisamment flexible dans la zone pour permettre une déformation plastique importante de la barre sans rupture, et la matière de ladite barre à l'intérieur de ladite zone et y compris son épaisseur totale étant suffisamment entièrement fusionnée ensemble et maintenant ainsi l'unité de la matière dans ladite zone pendant ladite déformation plastique.

9. Un procédé conformément à la revendication 8, comportant le durcissement de toute la longueur de la barre pour obtenir une dureté constante de résistance à l'usure, et le traitement différent de la barre dans la zone (36) afin de réduire la dureté dans la zone, pour permettre la flexion de la barre sans rupture.

10. Un procédé conformément à la revendication 9, dans lequel le traitement de la barre dans la zone (36) réduit la dureté de la zone à une valeur dans la gamme de 20 à 30 Rockwell C.

11. Un procédé conformément à la revendication 9, comportant le durcissement des bords de guidage à une première dureté dans la gamme de 55 à 61 Rockwell C,
le durcissement du corps de la barre à une deuxième dureté dans la gamme de 35 à 44 Rockwell C, et
le traitement de la zone (36) de manière à avoir une dureté des bords de guidage de la zone diminuant de la première dureté à chaque bord de la zone jusqu'à une troisième gamme de dureté près du centre de la zone, et de manière à avoir une dureté du corps de la zone diminuant depuis la deuxième dureté à chaque bord de la zone jusqu'à la troisième dureté près du centre de la zone, la troisième dureté étant dans la gamme de 20 à 30 Rockwell C.

12. Un procédé conformément à la revendication 8, 9, 10 ou 11, comportant la définition de la longueur de la zone à environ 7,62 (3 pouces) et situant un bord d'attaque de la zone à une distance d'environ 1,27 cm (1/2 pouce) proche de l'extrémité intérieure au-delà du support de celle-ci.
